# EUROPÄISCHE PATENTSCHRIFT

(11) **EP 2 508 091 B1**
(45) Veröffentlichungstag und Bekanntmachung des Hinweises auf die Patenterteilung: **11.12.2013**
(21) Anmeldenummer: 12163378.8
(22) Anmeldetag: 05.04.2012
(51) Int. Cl.: A43B 5/04, B29D 35/04, B29D 35/08, B29D 35/14

(54) **Schale eines Sportschuhs, insbesondere eines Schischuhs, und ein Verfahren zur Herstellung einer solchen Schale**
Shell of a sports shoe, in particular a ski shoe, and method for producing such a shell
Coque d'une chaussure de sport, en particulier une chaussure de ski, et procédé de fabrication de cette coque

(30) Priorität: 07.04.2011 AT 4982011
(43) Veröffentlichungstag der Anmeldung: 10.10.2012
(73) Patentinhaber: ATOMIC Austria GmbH, 5541 Altenmarkt im Pongau (AT)
(72) Erfinder: Trinkaus, Gerhard, 8580 Köflach (AT)
(74) Vertreter: Burger, Hannes

(56) Entgegenhaltungen:
- DE-A1- 2 159 526
- DE-T2-602004 001 357
- DE-T2-602004 003 248

## Beschreibung

Die Erfindung betrifft eine Schale eines Sportschuhs, insbesondere eines Schischuhs, sowie ein Verfahren zur Herstellung der Schale eines Sportschuhs, insbesondere eines Schischuhs, wie dies in den Ansprüchen 1 und 14 angegeben ist.

Aus dem Stand der Technik ist bekannt, eine solche Schale aus einem oder mehreren, insbesondere gelenkig verbundenen und mehrere Komponenten umfassenden Schalenteilen aufzubauen, wobei die Komponenten der Schalenteile bevorzugt aus unterschiedlichen Materialien bestehen, um insbesondere Schalenteile mit hoher Steifigkeit bzw. Formstabilität zu erhalten.

Die GB 1 491 634 zeigt eine in einem Spritzgießprozess hergestellte Schale eines Sportschuhs und ein Verfahren zur Herstellung der Schale. Zur Erhöhung der Zugsteifigkeit und Starrheit des elastischen Spritzgießmaterials der Schale wird zusätzlich ein poröses, stoffähnliches Einlageelement in der Schale integriert, wobei das Spritzgießmaterial das Einlageelement während des Herstellungsprozesses durchdringen und umschließen soll. Das poröse Einlageelement besteht aus mehreren Schichten Kunststoffgewebe bzw. Kunststofffolien und wird genau in jenen Bereichen des Sportschuhs platziert, in denen eine erhöhte Steifigkeit und Starrheit nötig bzw. vorgesehen ist. Gemäß dem gezeigten Verfahren wird auf einem fußförmigen Leisten zuerst das poröse, stoffähnliche Einlageelement aufgezogen, dann die äußere Spritzgießform über den Leisten und dem darauf befindlichen Einlageelement positioniert und schließlich das Spritzgießmaterial, wie beispielsweise Polyurethan, in den Raum zwischen Leisten und Spritzgießform eingebracht. Dabei soll das Spritzgießmaterial das poröse Einlageelement nicht nur durchdringen, sondern auch geringfügig vom Leisten abheben, sodass das Einlageelement vollständig vom Spritzgießmaterial umschlossen und ein einheitliches Schalenteil gebildet wird. Vor allem das leichte Abheben des Einlageelements vom fußförmigen Leisten stellt einen nur schwer kontrollierbaren Verfahrensschritt dar, sodass nicht immer sichergestellt werden kann, dass das Einlageelement vollständig vom Spritzgießmaterial umschlossen ist. Durch die gewünschte vollständige Umspritzung des Einlageelements ist es weiters nicht möglich, nach einer erfolgreichen Herstellung einer Schale eine einfache Positionskontrolle des Einlageelements etwa zur Qualitätsüberwachung durchzuführen.

Aus der EP 0 808 708 A1 ist ein Spritzgießverfahren insbesondere für Schalenteile eines Sportschuhs bekannt, bei dem in die Spritzgießform zuerst ein im ausgehärteten Zustand relativ weiches Spritzgießmaterial so eingebracht wird, dass Kanäle in dem erzeugten Spritzgießteil gebildet werden. In einem zweiten Verfahrensschritt werden diese Kanäle und ebenso die daran anschließenden Bereiche des aus dem relativ weichen Material bestehenden Spritzgießteils mit einem im ausgehärteten Zustand relativ harten Spritzgießmaterial überspritzt, um die Stabilität bzw. Steifigkeit des Spoilschuhs zu erhöhen. Durch das Überspritzen über den Bereich der Kanäle hinaus wird ein Austreten des im ausgehärteten Zustand relativ harten Spritzgießmaterials an den oberen Kanten der Kanäle im zweiten Herstellungsschritt verhindert, da die Spritzgießform nicht mehr genau an den oberen Kanten der Kanäle abdichtend positioniert werden muss, sondern etwas außerhalb der Kanäle flächig an den aus dem relativ weichen Spritzgießmaterial gefertigten Spritzgießteil stößt. Es sind somit größere Toleranzen bei der Positionierung bzw. bei den Abmessungen der Spritzgießformen bzw. Spritzgießteile möglich, wodurch weniger Ausschussteile zu erwarten sind. Das gezielte Befüllen der Kanäle mit dem im ausgehärteten Zustand relativ harten Spritzgießmaterial in einem weiteren Spritzgießvorgang stellt aber immer noch erhöhte technische Anforderungen an die im Spritzgießprozess eingesetzten Maschinen.

DE2159526 offenbart eine Schischuhschale mit den Merkmalen des Oberbegriffs des Anspruchs 1, und ein Verfahren zu dessen Herstellung gemäß dem Oberbegriff des Anspruchs 14.

Der vorliegenden Erfindung liegt die Aufgabe zugrunde, eine Schale eines Sportschuhs, insbesondere eines Schischuhs, zu schaffen, welche einerseits angenehm und komfortabel zu tragen ist, welche Schale andererseits aber auch schnelles und sportliches Fortbewegen bzw. Fahren erlaubt. Darüber hinaus ist es eine Aufgabe der Erfindung, ein Verfahren zur Herstellung einer solchen Schale eines Sportschuhs, insbesondere eines Schischuhs, zu schaffen, welches auf einfache Art und Weise durchgeführt werden kann und zugleich eine erhöhte Praxistauglichkeit aufweist.

Die erstgenannte Aufgabe der Erfindung wird durch eine Schale eines Sportschuhs entsprechend den Merkmalen im Anspruch 1 gelöst.

Erfindungsgemäß umfasst die Schale eines Sportschuhs, insbesondere eines Schischuhs, einen oder mehrere Schalenteile und weiters umfasst zumindest eines dieser Schalenteile mehrere dreidimensionale Komponenten, welche jeweils aus einem Kunststoff oder Metall mit einer bestimmten Stabilität bzw. Elastizität bestehen. Zumindest eines dieser dreidimensionalen Komponenten eines Schalenteils ist als Versteifungsteil ausgeführt, welches eine höhere Stabilität als die anderen Komponenten der Schalenteile aufweist. Durch entsprechendes Anordnen des Versteifungsteils wird in bestimmten Bereichen der Schale eines Sportschuhs die Stabilität bzw. Formsteifigkeit stark erhöht. Beispielsweise kann dadurch bei einem Schischuh die Stabilität einer Vorderfußschale im Fersen-, Knöchel-, Sohlen- und/oder Zehenbereich entsprechend erhöht werden. Dies ermöglicht ein schnelleres, spurgetreueres und sportlicheres Fahren, da eine direktere Kraftübertragung vom Fuß eines Benutzers über den stabileren Schischuh und eine Bindung auf einen Schi erreicht wird.

Durch Ausbilden des vom zumindest einen Versteifungsteil nicht überdeckten Abschnitts eines Schalenteils mit einem in Bezug auf den Versteifungsteil relativ flexiblen Kunststoff ist ein Sportschuh geschaffen, der aufgrund der Flexibilität der Schale in den nicht von Versteifungsteilen überdeckten Abschnitten sehr angenehm und komfortabel zu tragen ist. Da die Stabilität der Schale des Sportschuhs in ausreichendem Maße durch den oder die Versteifungsteile erreicht wird und somit die mittlere Dicke der Schale gegenüber einer Schale ohne Versteifungsteile erheblich reduziert werden kann, wird weiters das Gewicht der Schale des Sportschuhs und damit das Gesamtgewicht des Sportschuhs verkleinert. Vorteilhaft ist auch eine alternative Ausführungsform, bei der zwar die mittlere Dicke der Schale gegenüber einer Schale ohne Versteifungsteile im Wesentlichen gleich gehalten wird, wobei jedoch die Stabilität des gegenüber dem Versteifungsteil relativ flexiblen Kunststoffs niedriger als üblich gewählt wird, sodass einerseits durch die Verwendung der Versteifungsteile eine Schale mit ausreichender Stabilität sichergestellt ist und andererseits in den nicht von Versteifungsteilen überdeckten Abschnitten der Schale ein sehr flexibler Aufbau gegeben ist, wodurch ebenso der Tragekomfort erhöht wird.

Darüber hinaus ergibt sich eine sehr homogene Schaleninnenseite, da auch die Innenfläche des zumindest einen Versteifungsteils mit dem in Bezug auf den Versteifungsteil relativ flexiblen Kunststoff zumindest abschnittsweise überdeckt ist. Die Homogenität der Innenseite der Schale wird ebenso auch nicht durch die an der Innenfläche des Versteifungsteils angebrachten Abstandhalter gestört, da die äußersten, am weitesten von der Innenfläche des Versteifungsteils entfernten Endabschnitte der Abstandhalter flächenbündig mit der Innenseite des auf der Innenfläche des Versteifungsteils angeordneten, in Bezug auf den Versteifungsteil relativ flexiblen Kunststoffs verlaufen. Der eine oder die mehreren von der Innenfläche des Versteifungsteils abstehenden Abstandhalter ermöglichen auf sehr einfache und praktikable Art und Weise, den Versteifungsteil beim Spritzgießvorgang zur Herstellung des entsprechenden Schalenteils richtig und zuverlässig auf einem Leisten zu positionieren. Es ist aber auch möglich, dass die Stützflächen eines oder mehrerer Abstandhalter vom relativ flexiblen Kunststoff partiell überdeckt sind.

Durch die erfindungsgemäße Schale ist also ein Sportschuh geschaffen, der einerseits angenehm und komfortabel zu tragen ist, der aber auch schnelles und sportliches Fortbewegen erlaubt. Dies ist insbesondere bei einem Schischuh von Vorteil, welcher mit einem oder mehreren Versteifungsteilen in der Vorderfußschale und/oder der Manschette ausgestattet ist.

Von Vorteil ist eine Ausgestaltung nach Anspruch 2, da der genannte Verbundwerkstoff für den zumindest einen Versteifungsteil auf einfache Art und Weise, insbesondere in einem Spritzgießprozess, verarbeitet werden kann. Anders als beim sehr aufwändigen Herstellungsprozess, bei dem ein Gewebe aus im Wesentlichen parallelen Fasern, insbesondere Kohlenstofffasem, mit einem Kunststoff umschlossen wird und somit ein faserverstärkter Kunststoff entsteht, ist es im vorliegenden Fall möglich, den zumindest einen Versteifungsteil in einem relativ einfachen Spritzgießprozess herzustellen. Dabei ist bzw. wird dem Kunststoff eine Vielzahl von voneinander unabhängigen Fasern in zufallsorientierter Wirrlage beigefügt, welche vom Kunststoff umschlossen sind bzw. werden. Zum Vorteil der einfachen Verarbeitbarkeit des Verbundwerkstoffes für den zumindest einen Versteifungsteil in einem ausgereiften Spritzgießprozess kommt weiters hinzu, dass dieser Werkstoff einen sehr hohen Elastizitätsmodul von bis zu 12 GPa, bevorzugt einen Elastizitätsmodul von 0,9 GPa bis 1,5 GPa aufweist. Somit können mit diesem Verbundwerkstoff hochstabile Versteifungsteile hergestellt werden.

Von Vorteil sind auch die Maßnahmen nach Anspruch 3, da durch die Mindestlänge der dem Kunststoff beigefügten Fasern ein Verbundwerkstoff gebildet ist, der eine sehr hohe Stabilität bzw. ein sehr großes Elastizitätsmodul aufweist. Weiters wird durch Festlegen einer Maximallänge der dem Kunststoff beigefügten Fasern erreicht, dass diese Beifügung auf einfache Art und Weise unmittelbar während des Spritzgießvorganges zur Herstellung des zumindest einen Versteifungsteils durchführbar ist.

Von Vorteil sind auch die Maßnahmen gemäß Anspruch 4, da durch die Verwendung von einem in Bezug auf den Versteifungsteil relativ flexiblen Kunststoff in dem vom zumindest einen Versteifungsteil nicht überdeckten Abschnitt eines Schalenteils eine Schale eines Sportschuhs geschaffen ist, welche an bestimmten Stellen relativ flexibel ist und dadurch der Sportschuh angenehm und komfortabel zu tragen ist.

Bei den Maßnahmen gemäß Anspruch 5 ist von Vorteil, dass durch die Verwendung eines sehr dünnen Versteifungsteils, welcher aber aufgrund des verwendeten Werkstoffs eine ausreichende Stabilität aufweist, sehr leichte Schalenteile und damit Sportschuhe mit einem geringen Gesamtgewicht herstellbar sind.

Von Vorteil sind ebenso die Maßnahmen gemäß Anspruch 6, da durch die Fertigung eines im Vergleich zu den aus dem Stand der Technik bekannten Schalenteilen relativ dünnen Schalenteils erreicht wird, dass bei gleichbleibender Stabilität der Schale eines Sportschuhs dessen Gesamtgewicht reduziert ist.

Praktische Tests mit einer vorhandenen, klassisch aufgebauten Schale eines Schischuhs umfassend eine Vorderfußschale und eine gelenkig damit verbundene Manschette und einer entsprechenden neuen Schale mit Versteifungsteilen in der Vorderfußschale und der Manschette haben gezeigt, dass in diesem konkreten Fall bei einer im Wesentlichen gleichbleibenden Stabilität der Schale das Gewicht der Vorderfußschale von 870 g auf 795 g und das Gewicht der Manschette von 410 g auf 370 g reduziert werden konnte. Durch den erfindungsgemäßen Schalenaufbau ist also eine Gewichtsreduktion von zumindest rund 10 % gegenüber einem klassischen Schalenaufbau ohne Versteifungsteilen erreichbar.

Von Vorteil sind auch die Maßnahmen nach den Ansprüchen 7 und 8, da durch die Verwendung von derartigen Verbindungselementen im Randabschnitt des zumindest einen Versteifungsteils eine sehr stabile Verbindung zwischen dem Versteifungsteil und dem an diesen anschließenden, relativ flexiblen Kunststoff ausgebildet ist. Dadurch ist die Wahrscheinlichkeit eines Herauslösens bzw. Herausbrechens des Versteifungsteils aus dem Schalenteil bzw. dem relativ flexiblen Kunststoff bei einer Belastung verringert.

Von Vorteil sind weiters die Maßnahmen nach Anspruch 9, da dadurch der Spritzgießprozess zur Herstellung des Schalenteils, welcher den außen sichtbaren Versteifungsteil enthält, vereinfacht und zuverlässiger durchführbar wird. Der Grund ist, dass die Außenfläche des Versteifungsteils beim Spritzgießvorgang zumindest teilwiese an der Spritzgießform anliegt, wodurch zusammen mit den Abstandhaltern an der Innenfläche eine sichere Fixierung des Versteifungsteils in der Spritzgießform ermöglicht ist. Von besonderem Vorteil ist in diesem Zusammenhang auch die Ausführung, bei der im Wesentlichen die gesamte Außenfläche des zumindest einen Versteifungsteils an der Außenseite des Schalenteils sichtbar bzw. zugreifbar ist, weil der Versteifungsteil dann nur auf einer Seite, nämlich nur auf der Innenfläche hinterspritzt bzw. überspritzt werden muss. Weiters wird durch eine an der Außenseite des Schalenteils sichtbare Außenfläche des Versteifungsteils die Beständigkeit bzw. Robustheit der Au-βenseite im Bereich des Versteifungsteils gegenüber mechanischen Einwirkungen erhöht. Darüber hinaus verleiht die sichtbare Außenfläche dem Schalenteil und damit der gesamten Schale ein sehr spezifisches Aussehen, wodurch ein einzigartiger und unverwechselbarer Sportschuh geschaffen ist und eine Grundlage für den wirtschaftlichen Erfolg gelegt ist.

Von Vorteil sind ebenso die Maßnahmen gemäß Anspruch 10, da ein Sportschuh je nach Anwendungsfall vor allem in zumindest einem der genannten Bereiche eine erhöhte Stabilität aufweisen muss und diese Erhöhung der Stabilität durch die Anordnung eines oder mehrerer Versteifungsteile in diesen Bereichen auf einfache Art und Weise erreichbar ist.

Sehr vorteilhaft ist eine Ausgestaltung nach Anspruch 11, da es in sehr vielen Anwendungsfällen nötig ist, dass die Schale eines Sportschuhs im seitlichen Bereich ausgehend vom Fersenbereich und Achillessehnenbereich in Richtung zum Zehenbereich bis zum inneren und äußeren Knöchelbereich hin eine erhöhte Stabilität aufweist, sodass eine möglichst direkte Kraftübertragung vom Fuß bzw. Unterschenkel eines Benutzers des Sportschuhs auf den Sportschuh gegeben ist. Insbesondere gilt dies für Vorwärts- und Rückwärtsbewegungen und ebenso Seitwärtsbewegungen des Unterschenkels des Benutzers. Eine im beschriebenen Bereich stabile Schale ermöglicht somit eine exakte Führung des Sportschuhs bzw. eines damit verbundenen Sportgerätes, wie beispielsweise eines Gleitbretts oder Rollenkörpers, während einer Bewegung.

Von großem Vorteil ist auch eine Ausgestaltung nach Anspruch 12, da der beschriebene, einteilige Versteifungsteil einen formversteiften Schalenaufbau im inneren und äußeren Knöchelbereich und im Fersen- bzw. Achillessehnenbereich bewirkt und gleichzeitig ein relativ flexibler Schalenaufbau im inneren und äußeren Fußwurzelbereich gegeben ist, da der dort den Schalenteil bildende, relativ flexible Kunststoff nicht vom Versteifungsteil überdeckt ist. Untersuchungen zeigen, dass bei einer Bewegung des Fußes, insbesondere wenn der Unterschenkel relativ zum Fuß nach vor bewegt bzw. gekippt wird, im Bereich der inneren und äußeren Fußwurzel des Fußes eine Seitwärtsausdehnung auftritt. Somit ist es beispielsweise in Bezug auf den Tragekomfort von Vorteil, wenn die Schale eines Sportschuhs im Bereich der inneren und äußeren Fußwurzel eine relativ hohe Flexibilität aufweist. Um die Stabilität der Schale des Sportschuhs durch die Aussparungen im Bereich der inneren und äußeren Fußwurzel nicht zu stark zu verringern, ist es weiters von Vorteil, wenn unterhalb der inneren und äußeren Fußwurzelbereiche der Randabschnitt des einteiligen Versteifungsteils schräg nach unten bzw. schräg nach vorne in Richtung zum mittleren Sohlenbereich und zum Zehenbereich verläuft.

Von Vorteil ist auch eine Ausgestaltung nach Anspruch 13, da dadurch eine Manschette für einen Sportschuh herstellbar ist, welche einen sehr stabilen Rückenbereich und hinteren Seitenbereich aufweist, während gleichzeitig der restliche, vom Versteifungsteil nicht überdeckte Abschnitt der Manschette sehr flexibel ausgeführt ist. Dadurch ist der Tragekomfort des Sportschuhs erhöht, ohne dass dessen Stabilitäts- und Fortbewegungseigenschaften negativ beeinflusst werden bzw. wobei dessen Stabilitäts- und Fortbewegungseigenschaften sogar verbessert werden.

Die zweitgenannte Aufgabe der Erfindung wird durch ein Verfahren gemäß Anspruch 14 gelöst.

Bei den Maßnahmen gemäß Anspruch 14 ist von Vorteil, dass eine Schale eines Sportschuhs erzeugt wird, bei dem die Komponenten der Schalenteile eine unterschiedliche, bestimmte Stabilität bzw. Elastizität aufweisen und dass diese Eigenschaften somit entsprechend dem Verwendungszweck des Sportschuhs an die Bedürfnisse eines Benutzers exakt angepasst werden können. Weiters ist die Verwendung der einen oder mehreren von der Innenfläche eines Versteifungsteils abstehenden Abstandhalter von Vorteil, da dadurch auf einfache Art und Weise der zumindest eine Versteifungsteil auf einem Leisten derart positioniert werden kann, dass die äußersten, am weitesten von der Innenfläche des Versteifungsteils entfernten Endabschnitte bzw. Stützflächen der Abstandhalter an der Oberfläche des Leistens anliegen und dadurch ein Freiraum zwischen der Innenfläche des Versteifungsteils und der Oberfläche des Leistens ausgebildet wird. Das Hinterspritzen des zumindest einen Versteifungsteils, sodass der Freiraum zwischen der Innenfläche des Versteifungsteils und der Oberfläche des Leistens mit dem relativ flexiblen Kunststoff gefüllt wird, ist dadurch auf einfache und sichere Art und Weise ermöglicht, da die Abstandhalter den Versteifungsteil in Position halten und etwa ein Anliegen der Innenfläche des Versteifungsteils an der Oberfläche des Leistens ausgeschlossen wird. Durch ein solches Anliegen der Innenfläche des Versteifungsteils an der Oberfläche des Leistens würde der Hinterspritzvorgang negativ beeinflusst werden, da insbesondere nicht genügend flexibler Kunststoff an der Innenfläche des Versteifungsteils aufgebracht werden würde.

Weiters ist von besonderem Vorteil, dass die an der Oberfläche des Leistens anliegenden Endabschnitte bzw. Stützflächen der Abstandhalter vom relativ flexiblen Kunststoff nicht überdeckt werden und somit an der Innenseite des Schalenteils sicht- oder zugreifbar sind. Dadurch ist eine einfache und zuverlässige Kontrollmöglichkeit der Herstellungsqualität der Schale des Sportschuhs geschaffen, da über die sicht- oder zugreifbaren Endabschnitte bzw. Stützflächen der Abstandhalter eine Kontrolle des ordnungsgemäßen Sitzes des Versteifungsteils im bzw. am Schalenteil des Sportschuhs ermöglicht ist. Insbesondere lassen sich somit auf einfache Art und Weise die wichtigen Kontrollen durchführen, ob die Endabschnitte bzw. Stützflächen der Abstandhalter und somit der Versteifungsteil richtig positioniert sind und die Endabschnitte bzw. Stützflächen bündig mit der homogenen bzw. stetigen Innenseite der Schale des Sportschuhs verlaufen.

Zum besseren Verständnis der Erfindung wird diese anhand der nachfolgenden Figuren näher erläutert.

Es zeigen jeweils in stark vereinfachter, schematischer Darstellung:
- Fig. 1: eine Vorderfußschale eines Schischuhs, welche einen Versteifungsteil im Fersen- und Köchelbereich aufweist;
- Fig. 2: eine Schrägansicht des Versteifungsteils für den Fersen- und Knöchelbereich, wie er bei der Vorderfußschale nach Fig. 1 eingesetzt ist;
- Fig. 3: eine Seitenansicht des Versteifungsteils aus Fig. 2 für den Fersen- und Knöchelbereich;
- Fig. 4: einen Längsschnitt des Schischuhs umfassend die beiden gelenkig miteinander verbundenen Schalenteile Vorderfußschale und Manschette, wobei die in Fig. 1 separat dargestellte Vorderfußschale einen Versteifungsteil im Fersen- und Köchelbereich und einen Versteifungsteil im Sohlenbereich aufweist und wobei die Manschette einen Versteifungsteil im Rückenbereich und in den hinteren Seitenbereichen aufweist;
- Fig. 5: einen Querschnitt im Knöchelbereich der Vorderfußschale des Schischuhs aus Fig. 4;
- Fig. 6: eine Schrägansicht der Manschette aus Fig. 4, welche einen Versteifungsteil im Rückenbereich und in den hinteren Seitenbereichen aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

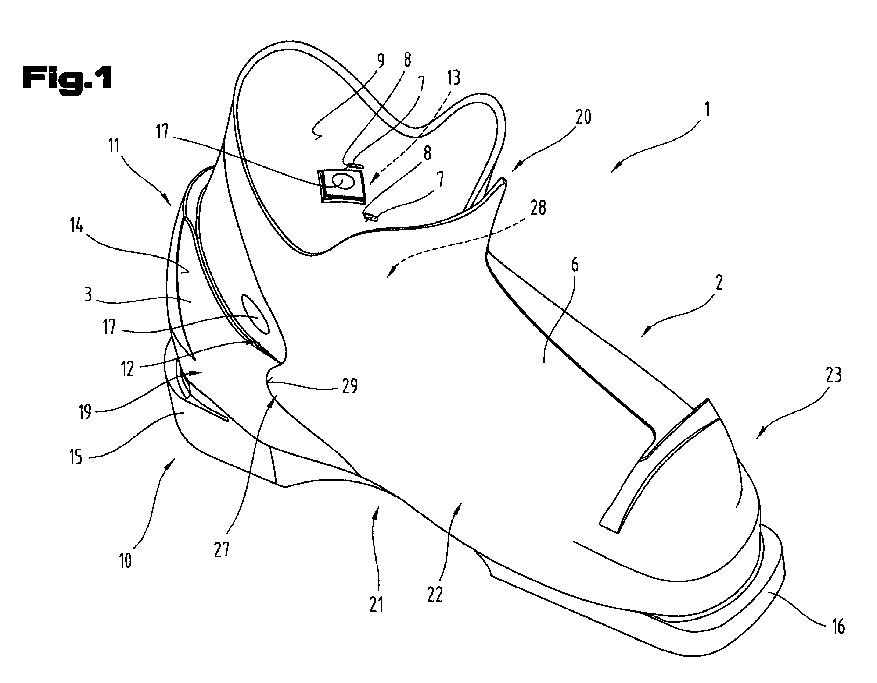

In Fig. 1 ist als Ausführungsbeispiel einer erfindungsgemäßen Schale 1 eines Sportschuhs eine Vorderfußschale 2 eines Schischuhs mit einem in der Vorderfußschale 2 integrierten Versteifungsteil 3 dargestellt. Ein derartiger Schischuh umfasst, wie an sich bekannt, typischerweise einen in die Schale 1 eingesetzten Innenschuh, wenigstens ein Spann- bzw. Zurrmittel und sonstige Komponenten, welche zur Erhöhung der Übersichtlichkeit nicht dargestellt wurden.

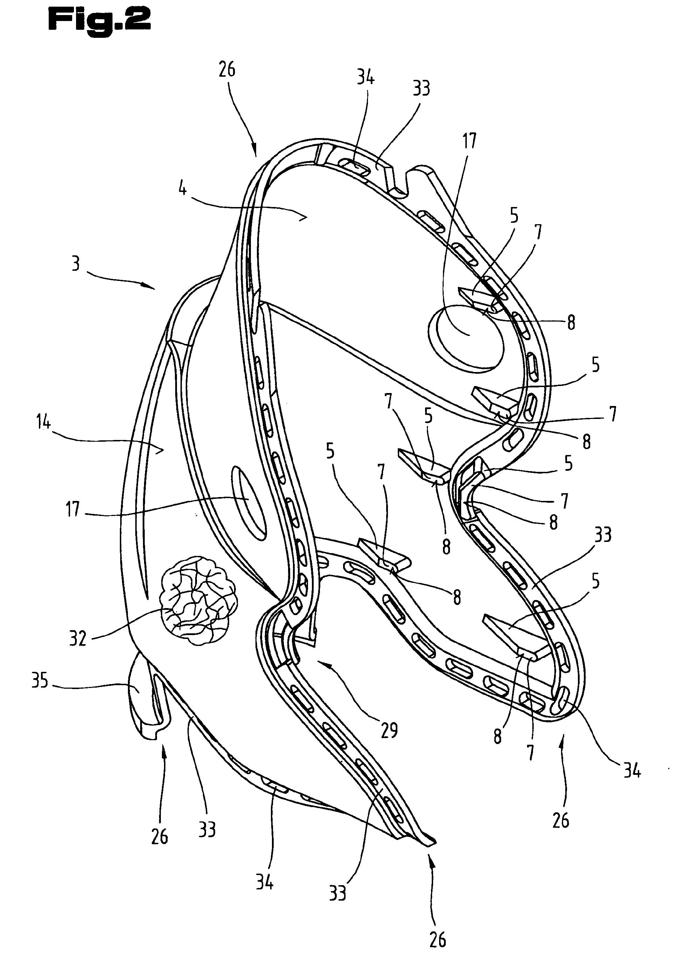

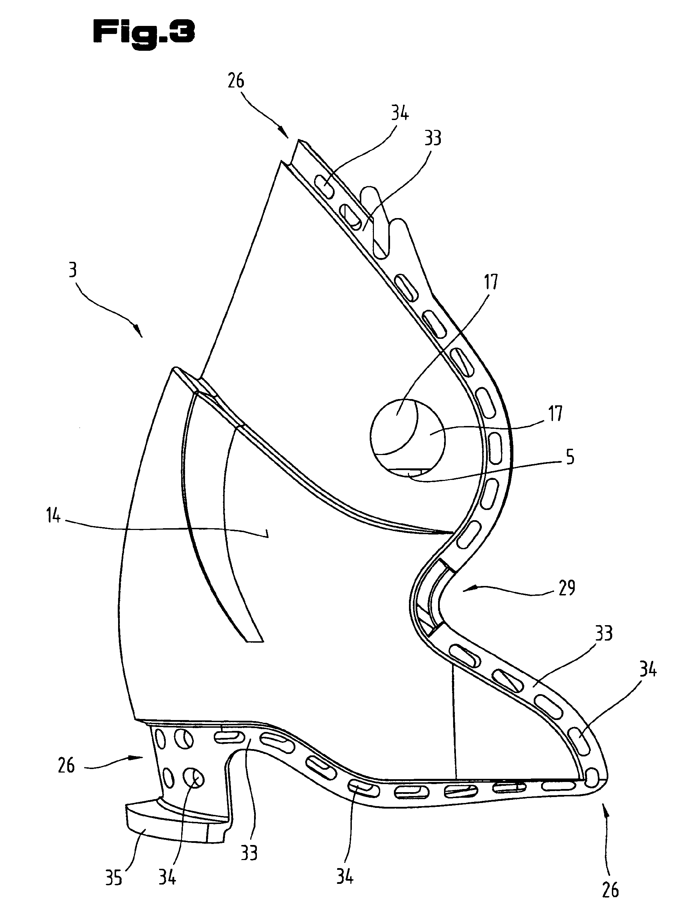

Die Fig. 2 und 3 zeigen eine Schräg- und eine Seitenansicht des Versteifungsteils 3 der Vorderfußschale 2.

Entsprechend dem dargestellten Ausführungsbeispiel ist der Versteifungsteil 3 im Fersenbereich 10, Achillessehnenbereich 11 und im inneren 12 und äußeren Knöchelbereich 13 einer Vorderfußschale 2 eines Schischuhs angeordnet. Der nicht vom Versteifungsteil 3 überdeckte Abschnitt 6 der Vorderfußschale 2 wird durch einen in Bezug auf den Versteifungsteil 3 relativ flexiblen Kunststoff gebildet. Bei der Herstellung der Vorderfußschale 2, insbesondere mittels eines Spritzgießprozesses, wird der Versteifungsteil 3 mit dem relativ flexiblen Kunststoff hinterspritzt, sodass die Innenfläche 4 des Versteifungsteils 3 vom relativ flexiblen Kunststoff zumindest partiell, bevorzugt großteils überdeckt ist.

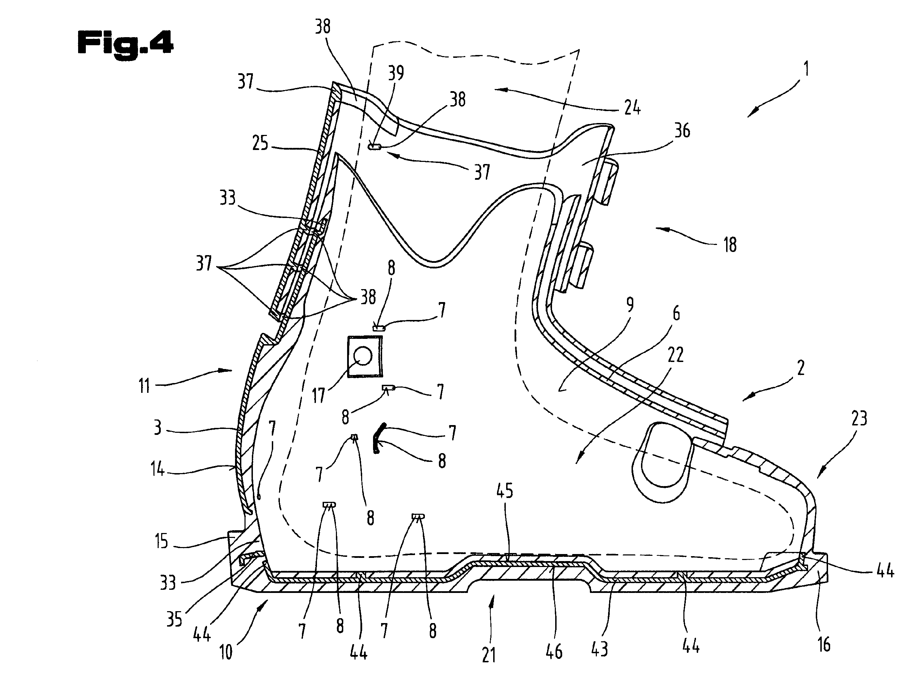

Die Außenfläche 14 des Versteifungsteils 3 wird im dargestellten Ausführungsbeispiel nicht vom relativ flexiblen Kunststoff überdeckt. Dies ist besonders zweckmäßig, da dadurch unter anderem der Spritzgießprozess zur Herstellung der Vorderfußschale 2, welche den Versteifungsteil 3 enthält, vereinfacht und zuverlässiger in der erfolgreichen Durchführung wird, weil der Versteifungsteil 3 nur auf einer Seite, nämlich der Innenfläche 4 hinterspritzt bzw. überspritzt werden muss. Die Außenfläche 14 liegt beim Spritzgießvorgang zumindest teilwiese an der Spritzgießform an, wodurch eine sichere Fixierung des Versteifungsteils 3 in der Spritzgießform gegeben ist. Durch eine an der Außenseite der Vorderfußschale 2 sichtbare Außenfläche 14 des Versteifungsteils 3 ist weiters die Beständigkeit bzw. Robustheit der Au-βenseite im Bereich des Versteifungsteils 3 gegenüber mechanischen Einwirkungen erhöht. Darüber hinaus verleiht die sichtbare Außenfläche 14 der Vorderfußschale 2 und damit der gesamten Schale 1 ein sehr spezifisches Aussehen, wodurch ein einzigartiger und unverwechselbarer Schischuh geschaffen ist. Wie aus Fig. 4 ersichtlich, ist es aber grundsätzlich ebenso möglich, dass auch eine Außenfläche 46 eines Versteifungsteils 43 vom relativ flexiblen Kunststoff überdeckt ist.

Um ein möglichst einfaches, genaues und sicheres Positionieren des bereits vorab gefertigten Versteifungsteils 3 auf einem Leisten, welcher zumindest einen Teil des Innenraums der Vorderfußschale 2 definiert, zu ermöglichen, ist der Versteifungsteil 3 mit mehreren, von dessen Innenfläche 4 abstehenden Abstandhaltern 5 ausgestattet, dessen Endabschnitte 7 bzw. Stützflächen 8 im Verlauf des Herstellungsprozesses an der Oberfläche des nicht dargestellten Leistens anliegen. Dadurch bildet sich ein Freiraum zwischen der Innenfläche 4 des Versteifungsteils und der Oberfläche des Leistens aus, welcher beim Spritzgießvorgang mit dem relativ flexiblen Kunststoff gefüllt wird. Nach Abschluss des Spritzgießvorgangs sind somit die gesamte Innenfläche 4 oder der überwiegende Teil der Innenfläche 4 des Versteifungsteils und die Oberfläche der Abstandhalter 5, ausgenommen deren Stützflächen 8 vom relativ flexiblen Kunststoff überdeckt. Da diese Stützflächen 8 flächenbündig mit der Innenseite 9 des auf der Innenfläche 4 des Versteifungsteils 3 angeordneten, relativ flexiblen Kunststoffs verlaufen, weist die Vorderfußschale 2 eine homogene und stetig verlaufende Innenseite 9 auf. In einer alternativen Ausführungsform können auch Teilabschnitte der Stützflächen 8 der Abstandhalter 5 vom relativ flexiblen Kunststoff überdeckt sein, d.h. partiell in den relativ flexiblen Kunststoff eingebettet sein.

Bevorzugt wird beim gezeigten Ausführungsbeispiel, welches die Vorderfußschale 2 eines Schischuhs darstellt, zumindest ein einteiliges Versteifungsteil 3 im Fersenbereich 10, Achillessehnenbereich 11 und im inneren 12 und äußeren Knöchelbereich 13 positioniert, sodass insbesondere eine gute Kraftübertragung und exakte Bewegungsweitergabe des Fußes bzw. des Unterschenkels eines Benutzers des Schischuhs über den hinteren Sohlenfortsatz 15 der Vorderfußschale 2 und über eine Bindung insbesondere an einen Schi gegeben ist. Des Weiteren gibt der Versteifungsteil 3 der Vorderfußschale 2 in ihrem rückwärtigen Abschnitt eine ausreichende Stabilität. Auch ist der Versteifungsteil 3 insbesondere so geformt, dass die Durchbrüche 17 im inneren 12 und äußeren Knöchelbereich 13 der Vorderfußschale 2, welche dem gelenkigen Verbinden der Vorderfußschale 2 und einer Manschette 18 - Fig. 4 - des Schischuhs dienen, im vom Versteifungsteil 3 überdeckten Bereich der Vorderfußschale 2 ausgebildet sind, sodass die Durchbrüche 17, wie am besten aus den Fig. 2 und 3 ersichtlich ist, ebenso im Versteifungsteil 3 im inneren 12 und äußeren Knöchelbereichen 13 ausgebildet sind.

Entsprechend der in Fig. 1 gezeigten, besonders vorteilhaften Ausführungsform überdeckt der einteilige Versteifungsteil 3 der Vorderfußschale 2 ausgehend vom Fersenbereich 10 und Achillessehnenbereich 11 die seitlichen Bereiche der Vorderfußschale 2 bis zum inneren 12 und äußeren Knöchelbereich 13. Zweckmäßig ist es, wenn der Versteifungsteil 3 auch die inneren 19 und äußeren Sprunggelenksbereiche 20 der Vorderfußschale 2 überdeckt, sodass in diesen Bereichen eine erhöhte Stabilität gegeben ist. Damit die Vorderfußschale 2 eine Seitwärtsausdehnung der inneren und äußeren Fußwurzel des Fußes eines Benutzers des Schischuhs, welche Fußwurzel sich bei einer Bewegung des Fußes, insbesondere wenn der Unterschenkel relativ zum Fuß nach vorne bewegt bzw. gekippt wird, zu beiden Seiten hin ausdehnt, zumindest teilweise zulässt, ist im inneren 27 und äußeren Fußwurzelbereich 28 der Vorderfußschale 2 eine Aussparung 29 im Versteifungsteil 3 ausgebildet. Diese Aussparung 29 wird durch ein bogenförmiges Zurücklaufen des Randabschnitts 26 - Fig. 2 und 3 - des Versteifungsteils 3 unterhalb der beiden Knöchelbereiche 12, 13 in Richtung Fersenbereich 10 erreicht. Somit wird der Abschnitt der Vorderfußschale 2 im Bereich der Aussparung 29 des Versteifungsteils 3 vom gegenüber dem Versteifungsteil 3 relativ flexiblen Kunststoff gebildet, wodurch sich in diesem Bereich eine erhöhte Flexibilität der Vorderfußschale 2 ergibt. Um dennoch eine ausreichende Stabilitätserhöhung durch den Versteifungsteil 3 zu erreichen, ist es zweckmäßig, dass der Randabschnitt 26 des Versteifungsteils 3 unterhalb des inneren 27 und äußeren Fußwurzelbereichs 28 und somit unterhalb der Aussparung 29 schräg nach unten bzw. nach vorne in Richtung zum mittleren Abschnitt des Sohlenbereiches 21 und zum Zehenbereich 23 der Vorderfußschale 2 verläuft.

Entsprechend einer besonders vorteilhaften Ausführungsform ist der zumindest eine Versteifungsteil 3 der Vorderfußschale 2 aus einem Kunststoff mit einer Vielzahl von in zufallsorientierter Wirrlage beigefügten, voneinander unabhängigen Fasern 32 - Fig. 2 -, insbesondere Kohlenstofffasern, gebildet. Zweckmäßiger Weise weist dieser faserverstärkte, hochstabile Kunststoff einen Elastizitätsmodul von bis zu 12 GPa, bevorzugt einen Elastizitätsmodul von 0,9 GPa bis 1,5 GPa auf, sodass die Vorderfußschale 2 in ihrem hinteren Bereich durch den Versteifungsteil 3 entsprechend formversteift ist.

Da die vielzähligen, voneinander unabhängigen Fasern 32 dem Kunststoff des Versteifungsteils 3 bei der Herstellung in zufallsorientierter Wirrlage beigefügt werden, ist es entsprechend einer vorteilhaften Ausführungsform möglich, den Versteifungsteil 3 vor der eigentlichen, insbesondere spritzgießbasierten Herstellung der Vorderfußschale 2 auch mittels eines Spritzgießprozesses herzustellen, bei dem die Fasern 32 einem Kunststoff beigefügt werden. Damit die vielzähligen, voneinander unabhängigen Fasern 32 beim Herstellungsprozess, insbesondere beim Spritzgießen des Versteifungsteils 3, einerseits dem Kunststoff in zufallsorientierter Wirrlage beigefügt werden können und andererseits der hergestellte Versteifungsteil 3 eine möglichst hohe Stabilität aufweist, ist es zweckmäßig, wenn die Fasern 32 eine durchschnittliche Faserlänge von 2 mm bis 7 mm haben.

Zweckmäßig ist es auch, wenn der vom zumindest einem Versteifungsteil 3 nicht überdeckte Abschnitt 6 der Vorderfußschale 2 durch einen in Bezug auf den Versteifungsteil 3 relativ flexiblen Kunststoff mit einem Elastizitätsmodul von 0,1 GPa bis 0,8 GPa, bevorzugt mit einem Elastizitätsmodul von 0,1 GPa bis 0,4 GPa gebildet ist. Damit wird im vom Versteifungsteil 3 nicht überdeckten Abschnitt 6 der Vorderfußschale 2 ein relativ flexibler Aufbau der Vorderfußschale 2 erreicht. Durch die Verwendung von Materialien mit unterschiedlichen Eigenschaften, insbesondere mit unterschiedlichen Oberflächeneigenschaften, sind weiters Komponenten von Schalenteilen, insbesondere Versteifungsteile 3, und nicht von den Versteifungsteilen 3 überdeckte Komponenten der Vorderfußschale 2 mit unterschiedlicher Haptik ausbildbar. Als Material für den relativ flexiblen Kunststoff wird insbesondere thermoplastisches Polyurethan (TPU) eingesetzt, welches auch als Grundmaterial für die Fertigung des faserverstärkten Versteifungsteils 3 eingesetzt werden kann.

Entsprechend einer vorteilhaften Ausführungsform weist der zumindest eine Versteifungsteil 3 der Vorderfußschale 2 eine Dicke von 2 mm bis 3 mm, bevorzugt von rund 2,5 mm auf. Ein solcher, relativ dünner Versteifungsteil 3, welcher im weiteren Verlauf des Herstellungsprozesses der Vorderfußschale 2 nur mehr mit einer relativ dünnen Schicht von flexiblem Kunststoff hinterspritzt wird, ermöglicht die Herstellung einer Vorderfußschale 2, deren Schalendicke gegenüber jener von aus dem Stand der Technik bekannten Vorderfußschalen reduziert ist, sodass eine Vorderfußschale 2 mit einem relativ geringeren Gewicht bei gleichbleibender oder sogar erhöhter Stabilität herstellbar ist.

Bevorzugt weist die Vorderfußschale 2 in dem vom zumindest einen Versteifungsteil 3 überdeckten Abschnitt eine Dicke von durchschnittlich 3 mm bis 7 mm, bevorzugt von durchschnittlich 4 mm bis 5 mm auf. Wie bereits erwähnt, wird durch die gegenüber dem Stand der Technik reduzierte Wandstärke der Vorderfußschale 2 eine Schale 1 eines Schischuhs herstellbar, welche bei zumindest gleich hohen Stabilitätswerten ein vermindertes Gewicht aufweist. In einer alternativen, zweckmäßigen Ausführungsform ist die Wandstärke der Vorderfußschale 2 gegenüber dem Stand der Technik nicht reduziert, jedoch ist die Stabilität des gegenüber dem Versteifungsteil 3 relativ flexiblen Kunststoffs niedriger als üblich gewählt, sodass die Schale 1 des Schischuhs bei zumindest gleich hohen Stabilitätswerten in dem vom zumindest einen Versteifungsteil 3 überdeckten Abschnitt im nicht vom Versteifungsteil 3 überdeckten Abschnitt 6 eine erhöhte Flexibilität aufweist.

Entsprechend einer besonders vorteilhaften Ausführungsform, welche am besten in den Fig. 2 und 3 ersichtlich ist, weist der zumindest eine Versteifungsteil 3 in seinem Randabschnitt 26 ein Verbindungselement 33 auf, sodass eine besonders haltbare bzw. widerstandsfähige Verbindung zwischen dem Versteifungsteil 3 und dem daran anschließenden, relativ flexiblen Kunststoff ausgebildet ist. Eine nochmalige Verbesserung der Verbindungseigenschaften wird durch das Ausbilden von einem oder mehreren Durchbrüchen 34 zwischen der Innen- und Außenfläche des Verbindungselements 33 erreicht, welche Durchbrüche 34 während des Herstellungsprozesses der Vorderfußschale 2 mit dem relativ flexiblen Kunststoff gefüllt werden.

Eine noch weitere Erhöhung der Haltbarkeit bzw. Widerstandsfähigkeit der Verbindung zwischen dem zumindest einem Versteifungsteil 3 und dem daran anschließenden, relativ flexiblen Kunststoff der Vorderfußschale 2 wird durch die Ausbildung zumindest eines Querelements 35 im Randbereich des Verbindungselements 33 erreicht.

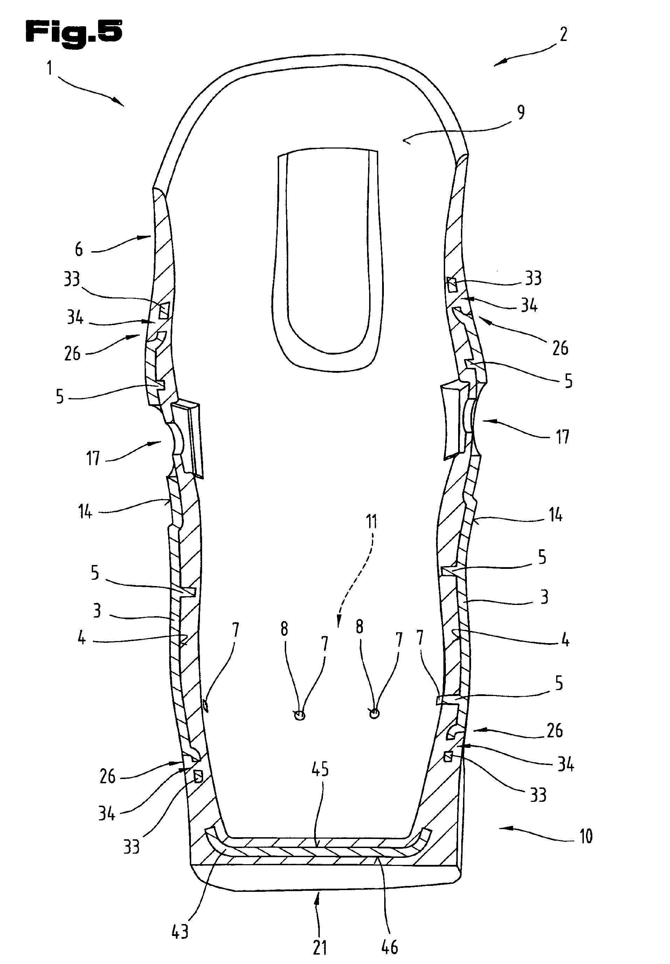

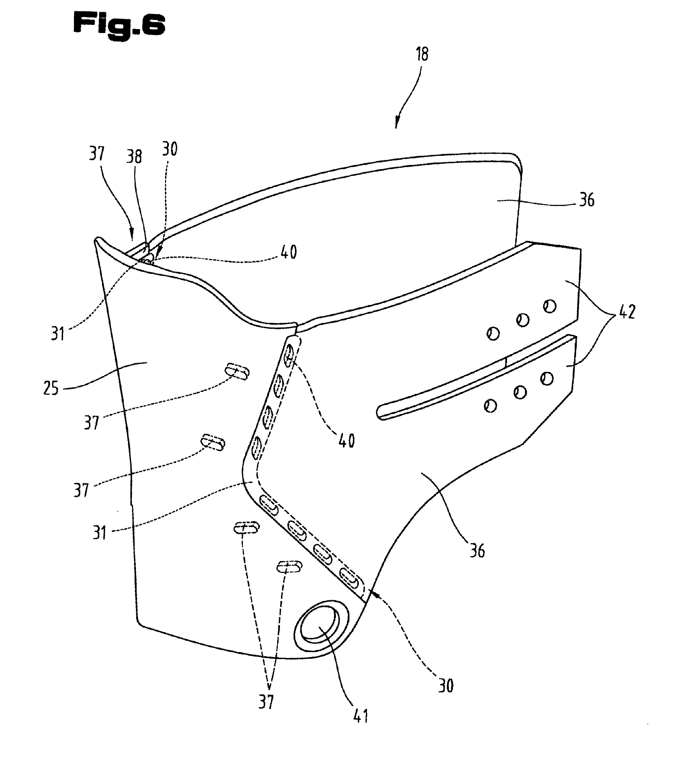

Den Fig. 4 und 5 sind Darstellungen eines Längsschnittes und eines Querschnittes der Schale 1 des Schischuhs zu entnehmen. In Fig. 4 ist auch eine Manschette 18 des Schischuhs im Längsschnitt dargestellt, welche darüber hinaus separat in einer Seitenansicht in der Fig. 6 gezeigt ist. Den Fig. 4 bis 6 sind weitere Ausführungsformen von Versteifungsteilen 25, 43 zu entnehmen, für welche sinngemäß auch die grundsätzlichen Darlegungen in der obigen Beschreibung des Versteifungsteils 3 gelten.

Entsprechend einer in den Fig. 4 und 5 gezeigten, zweckmäßigen Ausführungsform ist im Sohlenbereich 21 der Vorderfußschale 2 des Schischuhs ausgehend vom Fersenbereich 10 bis zum Zehenbereich 23 ein Versteifungsteil 43 ausgebildet. Abstandhalter 44 an der Innenfläche 45 des Versteifungsteils 43 dienen zur einfachen und genauen Positionierung des Versteifungsteils 43 auf einem Leisten während des Spritzgieß-Herstellungsprozesses der Vorderfußschale 2. Anders als beim Versteifungsteil 3 wird bei diesem Spritzgießvorgang nicht nur die Innenfläche 45 sondern auch die Außenfläche 46 des Versteifungsteils 43 mit dem relativ flexiblen Kunststoff überdeckt. Der Versteifungsteil 43, welcher insbesondere auch im Fersenbereich 10 mit dem Versteifungsteil 3 starr verbunden sein kann, dient unter anderem dazu, die Biegeeigenschaften der Vorderfußschale 2 entlang ihrer Längsachse zu beeinflussen und die Stabilität bzw. Formsteifigkeit der Vorderfußschale 2 zu erhöhen. Insbesondere sollen durch den Versteifungsteil 43 die in der Vorderfußschale 2 des Schischuhs auftretenden Kräfte möglichst unmittelbar und gezielt über den hinteren Sohlenfortsatz 15 und einen vorderen Sohlenfortsatz 16 insbesondere über eine Bindung an einen Schi übertragen werden.

Entsprechend einer nicht gezeigten Ausführungsform ist es auch zweckmäßig, im Mittelfußbereich 22 und/oder im seitlichen bzw. oberen Abschnitt des Zehenbereichs 23 der Vorderfußschale 2 ein oder mehrere weitere Versteifungsteile anzuordnen, um die Stabilität der Vorderfußschale 2 zu erhöhen.

Die Fig. 4 und 6 zeigen eine weitere, vorteilhafte Ausführungsform einer erfindungsgemäßen Schale 1 eines Schischuhs, bei der in der Manschette 18 des Schischuhs ein Versteifungsteil 25 integriert ist, welcher der Schale 1 im unteren Unterschenkelbereich 24 eine erhöhte Stabilität gibt. Insbesondere erhöht der Versteifungsteil 25 die Formstabilität der Manschette 18 in deren rückwärtigem Bereich und teilweise auch in deren hinteren Seitenbereichen aufgrund der speziellen, am besten in Fig. 6 ersichtlichen Ausformung des Versteifungsteiles 25. Der vom Versteifungsteil 25 nicht überdeckte Abschnitt 36 der Manschette 18 ist aus einem gegenüber dem Versteifungsteil 25 relativ flexiblen Kunststoff gefertigt, wodurch der Tragekomfort des Schischuhs erhöht wird. Insbesondere sind dadurch relativ flexible Laschen 42 an der Manschette 18 ausbildbar, welche in Verbindung mit einem nicht gezeigten Spannmittel ein einfaches und spielfreies Schließen der Manschette 18 um den Unterschenkel eines Benutzers ermöglichen.

Darüber hinaus verstärkt der Versteifungsteil 25 die Manschette 18 beiderseitig in den zu den Durchbrüchen 17 der Vorderfußschale 2 korrespondierenden Bereichen, in welchen ebenso Durchbrüche 41 ausgebildet sind. Über Verbindungselemente in den Durchbrüchen 17 und 41 sind die Vorderfußschale 2 und die Manschette 18 gelenkig miteinander verbunden.

Wie in der Fig. 6 angedeutet, ist der Versteifungsteil 25 in dem Randabschnitt 30, an welchen der relativ flexible Kunststoff anschließt, mit einem Verbindungselement 31 ausgestattet, sodass eine stabile und dauerhafte Verbindung zwischen dem Versteifungsteil 25 und dem relativ flexiblen Kunststoff des nicht vom Versteifungsteil 25 überdeckten Abschnitts 36 der Manschette 18 gegeben ist. Während der Herstellung der Manschette 18, insbesondere in einem Spritzgießvorgang, werden die Außenseiten des Verbindungselements 31 vom relativ flexiblen Kunststoff überdeckt. Um eine besonders stabile Verbindung zu erzielen, ist das Verbindungselement 31 weiters mit Durchbrüchen 40 ausgestattet, welche vom relativ flexiblen Kunststoff während des Spritzgießvorganges ausgefüllt werden.

Wie aus den Fig. 4 und 6 ersichtlich, ist der Versteifungsteil 25 an seiner Innenfläche auch mit einer Vielzahl von Abstandhaltern 37 ausgestattet, welche zur einfachen und genauen Positionierung des Versteifungsteils 25 auf einem Leisten verwendet werden. Vor der Herstellung der Manschette 18 wird der Versteifungsteil derart auf dem Leisten platziert, dass die Endabschnitte 38 bzw. die Stützflächen 39 der Abstandhalter 37 am Leisten anliegen und zwischen der Innenfläche des Versteifungsteils 25 und der Leistenoberfläche ein Hohlraum entsteht. Im anschließenden Spritzgießvorgang wird dieser Hohlraum mit dem relativ flexiblen Kunststoff gefüllt und es wird auch der nicht vom Versteifungsteil 25 überdeckte Abschnitt 36 der Manschette 18 aus dem relativ flexiblen Kunststoff hergestellt. Am Ende des Spritzgießvorgangs sind die Endabschnitte 38 bzw. die Stützflächen 39 der Abstandhalter 37 flächenbündig an der Innenseite der Manschette 18 angeordnet.

Besonders zweckmäßig ist auch die in Fig. 4 gezeigte Kombination der Versteifungsteile 3, 25, 43 in einer Schale 1 eines Sportschuhs, insbesondere eines Schischuhs. Durch die Anordnung der Versteifungsteile 3, 25, 43 ist eine hohe Stabilität der Schale 1 im rückwärtigen und hinteren, seitlichen Teil des unteren Unterschenkelbereichs 24, im Achillessehnenbereich 11, Fersenbereich 10, Knöchelbereich 12, 13 und Sprunggelenksbereich 19, 20 und im Sohlenbereich 21 bis zum Zehenbereich 23 gegeben. Alle anderen Bereiche der Schale 1 sind aus einem relativ flexiblen Kunststoff gefertigt, wodurch ein Sportschuh geschaffen ist, der einerseits angenehm und komfortabel zu tragen ist und der andererseits auch schnelles und sportliches Fortbewegen bzw. Fahren erlaubt.

Der Ordnung halber sei abschließend darauf hingewiesen, dass zum besseren Verständnis des Aufbaus der Schale eines Sportschuhs diese bzw. deren Bestandteile teilweise unmaßstäblich und/oder vergrößert und/oder verkleinert dargestellt wurden.

Die Ausführungsbeispiele zeigen mögliche Ausführungsvarianten der Schale eines Sportschuhs, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1 bis 3; 4 bis 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Schale | 41 | Durchbruch |
| 2 | Vorderfußschale | 42 | Lasche |
| 3 | Versteifungsteil | 43 | Versteifungsteil |
| 4 | Innenfläche | 44 | Abstandhalter |
| 5 | Abstandhalter | 45 | Innenfläche |
| | | | |
| 6 | Nicht überdeckter Abschnitt | 46 | Außenfläche |
| 7 | Endabschnitt | | |
| 8 | Stützfläche | | |
| 9 | Innenseite | | |
| 10 | Fersenbereich | | |
| | | | |
| 11 | Achillessehnenbereich | | |
| 12 | Innerer Knöchelbereich | | |
| 13 | Äußerer Knöchelbereich | | |
| 14 | Außenfläche | | |
| 15 | Hinterer Sohlenfortsatz | | |
| | | | |
| 16 | Vorderer Sohlenfortsatz | | |
| 17 | Durchbruch | | |
| 18 | Manschette | | |
| 19 | Innerer Sprunggelenksbereich | | |
| 20 | Äußerer Sprunggelenksbereich | | |
| | | | |
| 21 | Sohlenbereich | | |
| 22 | Mittelfußbereich | | |
| 23 | Zehenbereich | | |
| 24 | Unterer Unterschenkelbereich | | |
| 25 | Versteifungsteil | | |
| | | | |
| 26 | Randabschnitt | | |
| 27 | Innerer Fußwurzelbereich | | |
| 28 | Äußerer Fußwurzelbereich | | |
| 29 | Aussparung | | |
| 30 | Randabschnitt | | |
| | | | |
| 31 | Verbindungselement | | |
| 32 | Faser | | |
| 33 | Verbindungselement | | |
| 34 | Durchbruch | | |
| 35 | Querelement | | |
| | | | |
| 36 | Nicht überdeckter Abschnitt | | |
| 37 | Abstandhalter | | |
| 38 | Endabschnitt | | |
| 39 | Stützfläche | | |
| 40 | Durchbruch | | |

## Patentansprüche

1. Schale (1) eines Sportschuhs, insbesondere eines Schischuhs, welche aus einem oder mehreren Schalenteilen gebildet ist und wobei zumindest ein Schalenteil aus mehreren dreidimensionalen Komponenten, welche jeweils aus einem Kunststoff oder Metall mit einer bestimmten Stabilität bzw. Elastizität bestehen, zusammengesetzt ist und jeweils zwei Schalenteile gelenkig oder starr miteinander verbunden sind, um die Schale (1) des Sportschuhs zu bilden, und zumindest einer der Schalenteile zumindest einen Versteifungsteil (3) umfasst, welcher Versteifungsteil (3) eine dreidimensionale Komponente des Schalenteils bildet und eine höhere Stabilität als die anderen Komponenten der Schalenteile aufweist, **dadurch gekennzeichnet, dass** der Versteifungsteil (3) einen oder mehrere von der Innenfläche (4) des Versteifungsteils (3) abstehende Abstandhalter (5) aufweist, und dass der vom zumindest einen Versteifungsteil (3) nicht überdeckte Abschnitt (6) des Schalenteils durch einen in Bezug auf den Versteifungsteil (3) relativ flexiblen Kunststoff gebildet ist und die Innenfläche (4) des zumindest einen Versteifungsteils (3) mit dem in Bezug auf den Versteifungsteil (3) relativ flexiblen Kunststoff zumindest teilweise überdeckt ist, wobei die äußersten, am weitesten von der Innenfläche (4) des Versteifungsteils (3) entfernten Endabschnitte (7) der Abstandhalter (5) flächenbündig mit der Innenseite (9) des auf der Innenfläche (4) des Versteifungsteils (3) angeordneten, in Bezug auf den Versteifungsteil (3) relativ flexiblen Kunststoffs verlaufen und nicht mit dem relativ flexiblen Kunststoff überdeckt sind, sodass diese Endabschnitte (7) der Abstandhalter (5) an der Innenseite (9) des Schalenteils sicht- oder zugreifbar sind.

2. Schale eines Sportschuhs nach Anspruch 1, **dadurch gekennzeichnet, dass** der zumindest eine Versteifungsteil (3) des Schalenteils aus einem Kunststoff mit einer Vielzahl von in zufallsorientierter Wirrlage beigefügten, voneinander unabhängigen Fasern (32), insbesondere Kohlenstofffasern, gebildet ist, welcher Werkstoff einen Elastizitätsmodul von bis zu 12 GPa, bevorzugt einen Elastizitätsmodul von 0,9 GPa bis 1,5 GPa aufweist.

3. Schale eines Sportschuhs nach Anspruch 2, **dadurch gekennzeichnet, dass** die vielzähligen, voneinander unabhängigen Fasern (32), welche dem den Versteifungsteil (3) bildenden Kunststoff in zufallsorientierter Wirrlage beigefügt sind, eine durchschnittliche Faserlänge von 2 mm bis 7 mm aufweisen.

4. Schale eines Sportschuhs nach einem der vorhergehenden Ansprüche, **dadurch gekennzeichnet, dass** der vom zumindest einen Versteifungsteil (3) nicht überdeckte Abschnitt (6) des Schalenteils durch einen in Bezug auf den Versteifungsteil (3) relativ flexiblen Kunststoff mit einem Elastizitätsmodul von 0,1 GPa bis 0,8 GPa, bevorzugt mit einem Elastizitätsmodul von 0,1 GPa bis 0,4 GPa gebildet ist.

5. Schale eines Sportschuhs nach einem der vorhergehenden Ansprüche, **dadurch gekennzeichnet, dass** der zumindest eine Versteifungsteil (3) des Schalenteils eine Dicke von 2 mm bis 3 mm, bevorzugt von rund 2,5 mm aufweist.

6. Schale eines Sportschuhs nach einem der vorhergehenden Ansprüche, **dadurch gekennzeichnet, dass** der Schalenteil in dem vom zumindest einen Versteifungsteil (3) überdeckten Abschnitt eine Dicke von durchschnittlich 3 mm bis 7 mm, bevorzugt von durchschnittlich 4 mm bis 5 mm aufweist.

7. Schale eines Sportschuhs nach einem der vorhergehenden Ansprüche, **dadurch gekennzeichnet, dass** der zumindest eine Versteifungsteil (3) des Schalenteils in seinem Randabschnitt (26) wenigstens ein Verbindungselement (33) aufweist, dessen Außenseiten von dem in Bezug auf den Versteifungsteil (3) relativ flexiblen Kunststoff umschlossen sind.

8. Schale eines Sportschuhs nach Anspruch 7, **dadurch gekennzeichnet, dass** das wenigstens eine Verbindungselement (33) im Randabschnitt (26) des zumindest einen Versteifungsteils (3) Durchbrüche (34) zwischen Innen- und Außenfläche aufweist, welche mit dem in Bezug auf den Versteifungsteil (3) relativ flexiblen Kunststoff gefüllt sind.

9. Schale eines Sportschuhs nach einem der vorhergehenden Ansprüche, **dadurch gekennzeichnet, dass** von einer Außenfläche (14) des zumindest einen Versteifungsteils (3) mehr als 50 %, insbesondere mehr als 70 %, bevorzugt mehr als 90 % davon an der Außenseite des Schalenteils, welcher den zumindest einen Versteifungsteil (3) umfasst. sichtbar bzw. zugreifbar ist und nicht vom relativ flexiblen Kunststoff überdeckt ist.

10. Schale eines Sportschuhs nach einem der vorhergehenden Ansprüche, **dadurch gekennzeichnet, dass** ein oder mehrere Versteifungsteile (3, 25, 43) den Fersenbereich (10), den Knöchelbereich (12, 13), den Sprunggelenksbereich (19, 20), den Sohlenbereich (21), den Mittelfußbereich (22), den Zehenbereich (23) und/oder den unteren Unterschenkelbereich (24) des Sportschuhs zumindest teilweise überdecken.

11. Schale eines Sportschuhs nach einem der vorhergehenden Ansprüche, **dadurch gekennzeichnet, dass** zumindest ein einteiliges Versteifungsteil (3) in einem Schalenteil die seitlichen Bereiche ausgehend vom Fersenbereich (10) und Achillessehnenbereich (11) in Richtung zum Zehenbereich (23) bis zum inneren (12) und äußern Knöchelbereich (13) hin zumindest teilweise überdeckt, sodass zumindest im rückwärtigen und seitlichen Bereich des Schalenteils ein formversteifter Schalenaufbau gegeben ist.

12. Schale eines Sportschuhs nach Anspruch 11, **dadurch gekennzeichnet, dass** der zumindest eine, einteilige Versteifungsteil (3) den inneren (12) und äußeren Knöchelbereich (13) im Wesentlichen überdeckt und dass der Randabschnitt (26) des Versteifungsteils (3) unterhalb der beiden Knöchelbereiche (12,13) bogenförmig in Richtung Fersenbereich (10) zurückverläuft, sodass die inneren (27) und äußeren Fußwurzelbereiche (28) vom Versteifungsteil (3) ausgespart bzw. nicht überdeckt sind und somit die dortigen Abschnitte des Schalenteils nur von dem gegenüber dem Versteifungsteil (3) relativ flexiblen Kunststoff gebildet sind, und dass unterhalb der inneren (27) und äußeren Fußwurzelbereiche (28) der Randabschnitt (26) des Versteifungsteils (3) schräg nach unten bzw. nach vorne in Richtung zum mittleren Abschnitt des Sohlenbereichs (21) und zum Zehenbereich (23) des Schalenteils verläuft.

13. Schale eines Sportschuhs nach einem der vorhergehenden Ansprüche, **dadurch gekennzeichnet, dass** zumindest ein einteiliges Versteifungsteil (25) in einem Schalenteil die Rückseite und die hinteren Seitenbereiche des unteren Unterschenkelbereichs (24) zumindest teilweise überdeckt, sodass zumindest in dem rückwärtigen Bereich und den hinteren Seitenbereichen des Schalenteils ein formversteifter Schalenaufbau gegeben ist.

14. Verfahren zur Herstellung der Schale (1) eines Sportschuhs, insbesondere eines Schischuhs, wobei die Schale (1) aus einem oder mehreren Schalenteilen gebildet wird und zumindest ein Schalenteil durch Zusammensetzen von mehreren dreidimensionalen Komponenten, welche jeweils aus einem Kunststoff oder Metall mit einer bestimmten Stabilität bzw. Elastizität bestehen, gebildet wird und jeweils zwei Schalenteile gelenkig oder starr miteinander verbunden werden, um die Schale (1) des Sportschuhs zu bilden, **gekennzeichnet durch**, Herstellen zumindest eines Versteifungsteils (3), welcher eine dreidimensionale Komponente eines Schalenteils bildet, welcher Versteifungsteil (3) eine höhere Stabilität als die anderen Komponenten der Schalenteile aufweist und welcher Versteifungsteil (3) einen oder mehrere von der Innenfläche (4) des Versteifungsteils (3) abstehende Abstandhalter (5) aufweist, Positionieren des zumindest einen Versteifungsteils (3) auf einem zumindest einen Teil des Innenraums des Schalenteils definierenden Leisten derart, dass die äußersten, am weitesten von der Innenfläche (4) des Versteifungsteils (3) entfernten Endabschnitte (7) der Abstandhalter (5) an der Oberfläche des Leistens anliegen und **dadurch** ein Freiraum zwischen der Innenfläche (4) des Versteifungsteils (3) und der Oberfläche des Leistens ausgebildet wird, Umspritzen eines vom zumindest einen Versteifungsteil (3) nicht überdeckten Bereichs oder Teilbereichs der Oberfläche des Leistens mit einem in Bezug auf den Versteifungsteil (3) relativ flexiblen Kunststoff und Hinterspritzen des zumindest einen Versteifungsteils (3) mit dem in Bezug auf den Versteifungsteil (3) relativ flexiblen Kunststoff, sodass der Freiraum zwischen der Innenfläche (4) des Versteifungsteils (3) und der Oberfläche des Leistens mit dem relativ flexiblen Kunststoff gefüllt wird und wobei die an der Oberfläche des Leistens anliegenden Endabschnitte (7) der Abstandhalter (5) vom relativ flexiblen Kunststoff nicht überdeckt werden.

## Claims

1. Shell (1) of a sports shoe, in particular a ski boot, which is formed from one or more shell parts and at least one shell part is composed of several three-dimensional components, which are each made of a plastic material or metal having a certain stability or elasticity and in each case two of the shell parts are connected in an articulated or rigid way in order to form the shell (1) of the sports shoe and at least one of the shell parts comprises at least one stiffening part (3), which stiffening part (3) forms a three-dimensional component of the shell part and has a higher stability than the other components of the shell parts, **characterized in that** the stiffening part (3) has one or more spacers (5) protruding from the interior surface (4) of the stiffening part (3) and that the section (6) of the shell part not covered by the at least one stiffening part (3) is formed from a plastic material being relatively flexible compared to the stiffening part (3) and the interior surface (4) of the at least one stiffening part (3) is at least partly covered by the plastic material being relatively flexible compared to the stiffening part (3), with the outermost end portions (7) of the spacers which are furthest away from the interior surface (4) of the stiffening part (3) extending flush with the interior surface (9) of the plastic material, which is disposed at the interior surface (4) of the stiffening part (3) and is relatively flexible compared to the stiffening part (3), and the outermost end portions (7) of the spacers not being covered by the relatively flexible plastic material, with the result that these end sections (7) of the spacers (5) can be seen or accessed at the interior surface (9) of the shell part.

2. Shell of a sports shoe according to claim 1, **characterized in that** the at least one stiffening part (3) of the shell part is formed from a plastic material with a plurality of independent fibers (32), in particular carbon fibers, added in a randomized arrangement, which material has a modulus of elasticity of up to 12 GPa, preferably a modulus of elasticity of between 0.9 GPa and 1.5 GPa.

3. Shell of a sports shoe according to claim 2, **characterized in that** the numerous fibers (32) independent from each other, which are added to the plastic material forming the stiffening part (3) in a randomized arrangement, have an average fiber length of 2 mm to 7 mm.

4. Shell of a sports shoe according to one of the preceding claims, **characterized in that** the section (6) of the shell part not covered by the at least one stiffening part (3) is formed from a plastic material being relatively flexible compared to the stiffening part (3) and having a modulus of elasticity of 0.1 GPa to 0.8 GPa, preferably a modulus of elasticity of 0.1 GPa to 0.4 GPa.

5. Shell of a sports shoe according to one of the preceding claims, **characterized in that** the at least one stiffening part (3) of the shell part has a thickness of 2 mm to 3 mm, preferably of approximately 2.5 mm.

6. Shell of a sports shoe according to one of the preceding claims, **characterized in that** the shell part in the section covered by the at least one stiffening part (3) has an average thickness of 3 mm to 7 mm, preferably of 4 mm to 5 mm.

7. Shell of a sports shoe according to one of the preceding claims, **characterized in that** the at least one stiffening part (3) of the shell part at its edge section (26) has at least one connection element (33), the exterior surfaces of which are surrounded by the plastic material being relatively flexible compared to the stiffening part (3).

8. Shell of a sports shoe according to claim 7, **characterized in that** the at least one connection element (33) in the edge section of the at least one stiffening element (3) has apertures (34) between interior and exterior surface in the edge section (26), which are filled with the plastic material being relatively flexible compared to the stiffening part (3).

9. Shell of a sports shoe according to one of the preceding claims, **characterized in that** more than 50% of an exterior surface (14) of the at least one stiffening element (3), in particular more than 70%, preferably more than 90% of it, can be seen and accessed from the exterior surface of the shell part comprising at least one stiffening element (3) and is not covered by the relatively flexible plastic material.

10. Shell of a sports shoe according to one of the preceding claims, **characterized in that** one or more stiffening part (3, 25, 43) at least partly cover the heel area (10), the ankle area (12, 13), the ankle joint area (19, 20), the sole area (21), the metatarsus area (22), the toe area (23) and/or the lower area of the lower leg (24) of the sports shoe.

11. Shell of a sports shoe according to one of the preceding claims, **characterized in that** at least one one-piece stiffening part (3) in a shell part at least partly covers the lateral areas starting from the heel area (10) and the area of Achilles' tendon (11) in the direction towards the toe area (23) to the inner (12) and outer ankle area (13), with the result that at least in the rear and lateral region of the shell part a dimensionally stiffened formation of shell is provided.

12. Shell of a sports shoe according to claim 11, **characterized in that** the at least one, one-piece stiffening part (3) essentially covers the inner (12) and outer ankle area (13) and that the edge section (26) of the stiffening part (3) underneath the two ankle areas (12, 13) returns in direction of the heel area (10) in a curved way, so that the inner (27) and outer tarsus areas (28) of the stiffening part (3) remain recessed or not covered and thus, the sections of the shell part there are only formed from the plastic material being relatively flexible compared to the stiffening part (3) and that the edge sections (26) of the stiffening part (3) underneath the inner (27) and outer tarsus areas (28) extends diagonally downwards or forwards in the direction towards the middle section of the sole area (21) and towards the toe area (23) of the shell part.

13. Shell of a sports shoe according to one of the preceding claims, **characterized in that** at least one one-piece stiffening part (3) in a shell part at least partly covers the rear side and the rear lateral regions of the lower area of the lower leg (24), with the result that at least in the rear region and in the rear lateral regions of the shell part, a dimensionally stiffened shell formation is provided.

14. Method for producing a shell (1) of a sports shoe, in particular a ski boot, with the shell (1) being formed from one or more shell parts and at least one shell part being formed from compositing several three-dimensional components, which are each made of a plastic material or metal having a certain stability or elasticity and in each case two shell parts are connected in an articulated or rigid way in order to form the shell (1) of the sports shoe, **characterized in** producing at least one stiffening part (3), which forms a three-dimensional component of a shell part, which stiffening part (3) has a higher stability than the other components of the shell parts and which stiffening part (3) has one or more spacers (5) protruding from the interior surface (4) of the stiffening part (3), positioning of the at least one stiffening part (3) on a last defining at least a part of the interior of the shell part in such a way that the outermost end portions (7) of the spacers which are furthest away from the interior surface (4) of the stiffening part (3) rest against the surface of the last and thus, a clearance between the interior surface (4) of the stiffening element (3) and the surface of the last is created, injection-overmolding of a region or section of the surface of the last not covered by the at least one stiffening part (3) with a plastic material being relatively flexible compared to the stiffening part (3) and injection-back-molding of the at least one stiffening part (3) with the plastic material being relatively flexible compared to the stiffening part (3), with the result that the clearance between the interior surface (4) of the stiffening part (3) and the surface of the last are filled by the relatively flexible plastic material and with the end portions (7) of the spacers (5) bearing against the surface of the last not being covered by the relatively flexible plastic material.

## Revendications

1. Coque (1) d'une chaussure de sport, en particulier d'une chaussure de ski, laquelle est constituée de plusieurs parties de coque et au moins une partie de coque est composée de plusieurs composants tridimensionnels qui sont réalisés chacun en matière plastique ou en métal avec une stabilité ou élasticité déterminées, et respectivement deux parties de coque sont assemblées l'une à l'autre de manière articulée ou rigide pour former la coque (1) de la chaussure de sport, et au moins une des parties de coque comporte au moins une partie de renfort (3), laquelle partie de renfort (3) forme un composant tridimensionnel de la partie de coque et possède une plus grande stabilité que les autres composants des parties de coque, **caractérisée en ce que** la partie de renfort (3) comporte un ou plusieurs écarteurs (5) en saillie sur la face intérieure (4) de la partie de renfort (3), et **en ce que** la zone (6) de la partie de coque, non recouverte par ladite au moins une partie de renfort (3), est formée par une matière plastique relativement flexible par rapport à la partie de renfort (3), et la face intérieure (4) de ladite au moins une partie de renfort (3) est recouverte au moins en partie par la matière plastique relativement flexible par rapport à la partie de renfort (3), les zones d'extrémité (7) des écarteurs (5), les plus extérieures et les plus éloignées de la face intérieure (4) de la partie de renfort (3), s'étendant à fleur avec le côté intérieur (9) de la matière plastique relativement flexible par rapport à la partie de renfort (3) et disposée sur la face intérieure (4) de la partie de renfort (3) et n'étant pas recouvertes par la matière plastique relativement flexible, de telle sorte que lesdites zones d'extrémité (7) des écarteurs (5) sont visibles ou accessibles sur le côté intérieur (9) de la partie de coque.

2. Coque d'une chaussure de sport selon la revendication 1, **caractérisée en ce que** ladite au moins une partie de renfort (3) de la partie de coque est réalisée dans une matière plastique avec une pluralité de fibres (32), en particulier des fibres carbone, indépendantes les unes des autres et insérées dans des couches emmêlées à orientation aléatoire, laquelle matière possède un module d'élasticité allant jusqu'à 12 GPa, de préférence un module d'élasticité de 0,9 GPa à 1,5 GPa.

3. Coque d'une chaussure de sport selon la revendication 2, **caractérisée en ce que** la pluralité de fibres (32), qui sont indépendantes les unes des autres et qui sont insérées dans des couches emmêlées à orientation aléatoire formant la partie de renfort (3), ont une longueur de fibre moyenne de 2 mm à 7 mm.

4. Coque d'une chaussure de sport selon l'une quelconque des revendications précédentes, **caractérisée en ce que** la zone (6) de la partie de coque, non recouverte par ladite au moins une partie de renfort (3), est formée par une matière plastique relativement flexible par rapport à la partie de renfort (3), ayant un module d'élasticité de 0,1 GPa à 0,8 GPa, de préférence un module d'élasticité de 0,1 GPa à 0,4 GPa.

5. Coque d'une chaussure de sport selon l'une quelconque des revendications précédentes, **caractérisée en ce que** ladite au moins une partie de renfort (3) de la partie de coque a une épaisseur de 2 mm à 3 mm, de préférence de 2,5 mm environ.

6. Coque d'une chaussure de sport selon l'une quelconque des revendications précédentes, **caractérisée en ce que** la partie de coque, dans la zone recouverte par ladite au moins une partie de renfort (3), a une épaisseur de 3 mm à 7 mm en moyenne, de préférence de 4 mm à 5 mm en moyenne.

7. Coque d'une chaussure de sport selon l'une quelconque des revendications précédentes, **caractérisée en ce que** ladite au moins une partie de renfort (3) de la partie de coque comporte dans sa zone de bordure (26) au moins un élément d'assemblage (33), dont les faces extérieures sont entourées par la matière plastique relativement flexible par rapport à la partie de renfort (3).

8. Coque d'une chaussure de sport selon la revendication 7, **caractérisée en ce que** ledit au moins un élément d'assemblage (33) dans la zone de bordure (26) de ladite au moins une partie de renfort (3), comporte des ajours (34) entre la face intérieure et la face extérieure, lesquels sont remplis par la matière plastique relativement flexible par rapport à la partie de renfort (3).

9. Coque d'une chaussure de sport selon l'une quelconque des revendications précédentes, **caractérisée en ce que** plus de 50 %, en particulier plus de 70 %, de préférence plus de 90 % d'une face extérieure (14) de ladite au moins une partie de renfort (3) sont visibles ou accessibles sur la face extérieure de la partie de coque, qui comporte ladite au moins une partie de renfort (3), et ne sont pas recouverts par la matière plastique relativement flexible.

10. Coque d'une chaussure de sport selon l'une quelconque des revendications précédentes, **caractérisée en ce qu'**une ou plusieurs parties de renfort (3, 25, 43) recouvrent au moins en partie la région du talon (10), la région de la cheville (12, 13), la région de l'articulation du cou-de-pied (19, 20), la région de la plante du pied (21), la région du métatarse (22), la région des orteils (23) et/ou la région inférieure du bas de la jambe (24) de la chaussure de sport.

11. Coque d'une chaussure de sport selon l'une quelconque des revendications précédentes, **caractérisée en ce qu'**au moins une partie de renfort (3) d'un seul tenant recouvre dans une partie de coque au moins partiellement les zones latérales à partir de la région du talon (10) et la région du tendon d'Achille (11) vers la région des orteils (23) jusqu'à la région intérieure (12) et la région extérieure (13) de la cheville, de telle sorte qu'au moins dans la zone arrière et latérale de la partie de coque on obtient une structure de coque rigidifiée dans sa forme.

12. Coque d'une chaussure de sport selon la revendication 11, **caractérisée en ce que** ladite au moins une partie de renfort (3) d'un seul tenant recouvre sensiblement la région intérieure (12) et la région extérieure (13) de la cheville, et **en ce que** la zone de bordure (26) de la partie de renfort (3), en dessous des deux régions de la cheville (12, 13), revient en forme de courbe vers la région du talon (10), de telle sorte que les régions intérieures (27) et extérieures (28) du tarse sont évidées et non recouvertes par la partie de renfort (3) et, par conséquent, les zones de la partie de coque dans ces régions sont uniquement formées par la matière plastique relativement flexible par rapport à la partie de renfort (3), et **en ce que**, en dessous des régions intérieures (27) et extérieures (28) du tarse, la zone de bordure (26) de la partie de renfort (3) s'étend en oblique vers le bas et vers l'avant en direction de la zone centrale de la région de la plante du pied (21) et de la région des orteils (23) de la partie de coque.

13. Coque d'une chaussure de sport selon l'une quelconque des revendications précédentes, **caractérisée en ce qu'**au moins une partie de renfort (25) d'un seul tenant recouvre, dans une partie de coque, au moins en partie la face arrière et les zones latérales arrières de la région inférieure (24) du bas de la jambe, de telle sorte qu'au moins dans la zone arrière et dans les zones latérales arrières de la partie de coque, on obtient une structure de coque rigidifiée dans sa forme.

14. Procédé de réalisation de la coque (1) d'une chaussure de sport, en particulier une chaussure de ski, ladite coque (1) étant constituée d'une ou de plusieurs parties de coque et au moins une partie de coque est composée de plusieurs composants tridimensionnels qui sont réalisés chacun en matière plastique ou en métal avec une stabilité ou élasticité déterminées, et respectivement deux parties de coque sont assemblées l'une à l'autre de manière articulée ou rigide pour former la coque (1) de la chaussure de sport, **caractérisé par** : la réalisation d'au moins une partie de renfort (3) qui forme un composant tridimensionnel d'une partie de coque, laquelle partie de renfort (3) possède une plus grande stabilité que les autres composants des parties de coque, et laquelle partie de renfort (3) comporte un ou plusieurs écarteurs (5) en saillie sur la face intérieure (4) de la partie de renfort (3) ; le positionnement de ladite au moins une partie de renfort (3) sur une forme définissant au moins une partie du volume intérieur de la partie de coque, de telle sorte que les zones d'extrémité (7) des écarteurs (5), les plus extérieures et les plus éloignées de la face intérieure (4) de la partie de renfort (3), sont en appui contre la face supérieure de la forme et, de ce fait, il se forme un dégagement entre la face intérieure (4) de la partie de renfort (3) et la face supérieure de la forme ; le surmoulage par injection d'une zone ou zone partielle, non recouverte par ladite au moins une partie de renfort (3), de la face supérieure de la forme avec une matière plastique relativement flexible par rapport à la partie de renfort (3) et le sous-moulage par injection de ladite au moins une partie de renfort (3) avec la matière plastique relativement flexible par rapport à la partie de renfort (3), de telle sorte que le dégagement entre la face intérieure (4) de la partie de renfort (3) et la face supérieure de la forme est rempli par la matière plastique relativement flexible, et la matière plastique relativement flexible ne recouvrant pas les zones d'extrémité (7) des écarteurs (5), lesquelles sont en appui contre la face supérieure de la forme.
